# EUROPÄISCHE PATENTANMELDUNG

(11) **EP 4 317 857 A1**
(43) Veröffentlichungstag der Anmeldung: **07.02.2024**
(21) Anmeldenummer: 22188400.0
(22) Anmeldetag: 02.08.2022
(51) Int. Cl.: F25B 41/22, F25B 49/02, G01M 99/00, G01N 17/00

(54) **PRÜFKAMMER UND VERFAHREN**

(71) Anmelder: Weiss Technik GmbH, 35447 Reiskirchen (DE)
(72) Erfinder: Zahrt, Yannik, 35466 Rabenau (DE)
(74) Vertreter: advotec.

(57) **Zusammenfassung**

Die Erfindung betrifft ein Verfahren sowie eine Prüfkammer zur Konditionierung von Luft, insbesondere Klimakammer oder dergleichen, wobei die Prüfkammer einen gegenüber einer Umgebung verschließbaren und temperaturisolierten Prüfraum (11) zur Aufnahme von Prüfgut, und eine Temperiervorrichtung zur Temperierung des Prüfraums umfasst, wobei mittels der Temperiervorrichtung eine Temperatur in einem Temperaturbereich von -40 °C bis +180 °C innerhalb des Prüfraums ausbildbar ist, wobei die Temperiervorrichtung eine Heizeinrichtung und eine Kühleinrichtung mit einem Kühlkreislauf (10) umfasst, wobei der Kühlkreislauf ein Kältemittel, einen im Prüfraum angeordneten Wärmeübertrager (12), einen Verdichter (13), einen Kondensator (14) und ein Expansionsorgan (15) aufweist, wobei das Kältemittel ein Kohlenwasserstoff oder ein Kältemittelgemisch aus Kohlenwasserstoffen ist, wobei in dem Kühlkreislauf in einer Strömungsrichtung nachfolgend dem Wärmeübertrager und vor dem Verdichter ein Absperrorgan (23) angeordnet ist, mittels dem ein Rückfluss von Kältemittel in dem Wärmeübertrager entgegen der Strömungsrichtung absperrbar ist.

## Beschreibung

Die Erfindung betrifft ein Verfahren und eine Prüfkammer zur Konditionierung von Luft, insbesondere Klimakammer oder dergleichen, wobei die Prüfkammer einen gegenüber einer Umgebung verschließbaren und temperaturisolierten Prüfraum zur Aufnahme von Prüfgut, und eine Temperiervorrichtung zur Temperierung des Prüfraums umfasst, wobei mittels der Temperiervorrichtung eine Temperatur in einen Temperaturbereich von -40 °C bis +180 °C innerhalb des Prüfraums ausbildbar ist, wobei die Temperiervorrichtung eine Heizeinrichtung und eine Kühleinrichtung mit einem Kühlkreislauf umfasst, wobei der Kühlkreislauf ein Kältemittel, einen im Prüfraum angeordneten Wärmeübertrager, einen Verdichter, einen Kondensator und ein Expansionsorgan aufweist, wobei das Kältemittel ein Kohlenwasserstoff oder ein Kältemittelgemisch aus Kohlenwasserstoffen ist.

Derartige Prüfkammern werden regelmäßig zur Überprüfung von physikalischen und/oder chemischen Eigenschaften von Gegenständen, insbesondere Vorrichtungen, eingesetzt. So sind Temperaturprüfschränke oder Klimaprüfschränke bekannt, innerhalb derer Temperaturen in einem Bereich von -40 °C bis +180 °C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Eine Temperierung eines das zu prüfende Prüfgut aufnehmenden Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal bzw. den Prüfraum durchströmenden Luft angeordnet sind. Dabei saugt ein Lüfter bzw. ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfintervalls kann dann beispielsweise eine Temperatur zwischen einem Temperaturmaximum und einem Temperaturminimum der Prüfkammer wechseln. Eine derartige Prüfkammer ist aus der EP 0 344 397 A2 bekannt.

Das in einem Kühlkreislauf eingesetzte Kältemittel sollte ein relatives geringes CO2-Äquivalent aufweisen, d.h. ein relatives Treibhauspotenzial oder auch Global Warming Potential (GWP) sollte möglichst gering sein, um eine indirekte Schädigung der Umwelt durch das Kältemittel bei Freisetzung zu vermeiden. Es ist zwar auch bekannt, Kohlenwasserstoffe als Kältemittel zu verwenden, hier ist jedoch nachteilig, dass Kohlenwasserstoffe leicht brennbar sind. Unter Brennbarkeit wird hier die Eigenschaft des Kältemittels verstanden, mit Umgebungssauerstoff unter Freisetzung von Wärme zu reagieren. Ein Kältemittel ist insbesondere dann brennbar, wenn es in die Brandklasse C nach der europäischen Norm DN 2 bzw. der DIN 378 Klassen A2, A2L und A3 in der zuletzt am Prioritätstag gültigen Fassung fällt. Wird ein brennbares Kältemittel verwendet, ist unter anderem eine Befüllung, ein Versand und ein Betrieb eines Kühlkreislaufs bzw. einer Prüfkammer aufgrund der einzuhaltenden Sicherheitsvorschriften erschwert. Ein wesentliches Problem ist eine mögliche Leckage des Kühlkreislaufs innerhalb des Prüfraums, in dem sich elektrische Widerstandsheizungen und auch elektrisch betriebene Geräte, als Prüfgut, befinden können. Im Falle einer Leckage kann es daher zu einer Explosion kommen.

Infolge gesetzlicher Bestimmungen darf ein Kältemittel nicht wesentlich zum Ozonabbau in der Atmosphäre oder der globalen Erwärmung beitragen. So sollen im Wesentlichen keine fluorierten Gase oder fluorierten Stoffe als Kältemittel eingesetzt werden, weshalb natürliche Kältemittel, beispielsweise Kohlenstoffdioxid (CO2) in Frage kommen. Nachteilig bei derartigen Kältemitteln mit geringen GWP ist, dass diese Kältemittel in den für einen Kühlkreislauf relevanten Temperaturbereichen eine teilweise deutlich verringerte Kälteleistung im Vergleich zu Kältemitteln mit vergleichsweise größeren GWP aufweisen. Mit Kältemittelgemischen, die einen vergleichsweise hohen Masseanteil an Kohlendioxid aufweisen, kann ein niedriger GWP erzielt werden, wobei diese Kältemittelgemische aufgrund der unterschiedlichen, miteinander gemischten Stoffe, zeotrope Eigenschaften aufweisen können, was wiederum bei vielen Kühlkreisläufen unerwünscht ist. Darüber hinaus muss ein Anteil an Kohlenstoffdioxid so groß sein, dass das Kältemittel nicht brennbar ist. So ist der aus der WO 2019/048250 A1 eine Prüfkammer mit einem Kältemittel bekannt, welches im Wesentlichen aus Kohlenstoffdioxid, Pentafluorethan und Difluormethan besteht. Nachteilig ist hier, dass zur Erzielung besonders tiefer Temperaturen eine Unterkühlung des Kältemittels mittels eines internen Wärmeübertragers in einem Kühlkreislauf erforderlich ist. Weiter hat das Kältemittel zeotrope Eigenschaften und enthält als Komponenten fluorierte Gase.

Der vorliegenden Erfindung liegt daher die Aufgabe zugrunde, eine Prüfkammer und ein Verfahren zur Konditionierung von Luft mittels einer Prüfkammer vorzuschlagen, mit der bzw. dem ein sicherer Betrieb der Prüfkammer mit Kohlenwasserstoffen als Kältemittel möglich ist.

Diese Aufgabe wird durch eine Prüfkammer mit den Merkmalen des Anspruchs 1 und ein Verfahren mit den Merkmalen des Anspruchs 9 gelöst.

Die erfindungsgemäße Prüfkammer zur Konditionierung von Luft, insbesondere Klimakammer oder dergleichen, umfasst einen gegenüber einer Umgebung verschließbaren und temperaturisolierten Prüfraum zur Aufnahme von Prüfgut, und eine Temperiervorrichtung zur Temperierung des Prüfraums, wobei mittels der Temperiervorrichtung eine Temperatur in einem Temperaturbereich von -40 °C bis +180 °C innerhalb des Prüfraums ausbildbar ist, wobei die Temperiervorrichtung eine Heizeinrichtung und eine Kühleinrichtung mit einem Kühlkreislauf umfasst, wobei der Kühlkreislauf ein Kältemittel, einen im Prüfraum angeordneten Wärmeübertrager, einen Verdichter, einen Kondensator und ein Expansionsorgan aufweist, wobei das Kältemittel ein Kohlenwasserstoff oder ein Kältemittelgemisch aus Kohlenwasserstoffen ist, wobei in dem Kühlkreislauf in einer Strömungsrichtung nachfolgend dem Wärmeübertrager und vor dem Verdichter ein Absperrorgan angeordnet ist, mittels dem ein Rückfluss von Kältemittel in den Wärmeübertrager entgegen der Strömungsrichtung absperrbar ist.

Mit der erfindungsgemäßen Prüfkammer ist es möglich als Kältemittel ein Kohlenwasserstoff oder ein Kältemittelgemisch aus Kohlenwasserstoffen in dem Kühlkreislauf sicher zu verwenden. Während eines Einsatzes der Kühleinrichtung bzw. bei einer Kühlung des Prüfraums über den darin angeordneten Wärmeübertrager wird das verdichtete Kältemittel über das Expansionsorgan in den Wärmeübertrager dosiert bzw. entspannt, wodurch eine Temperatur des Wärmeübertragers abgesenkt wird. Der in einer Strömungsrichtung des Kältemittels auf den Wärmeübertrager folgende Verdichter saugt das Kältemittel von einer sogenannten Niederdruckseite des Kühlkreislaufs an und verdichtet es auf einer sogenannten Hochdruckseite des Kühlkreislaufs. Soll nun im Rahmen eines Prüfablaufs eine höhere Temperatur in dem Prüfraum ausgebildet werden, erfolgt eine Erwärmung der Luft des Prüfraums mittels der Heizeinrichtung. Dabei wird auch der Wärmeübertrager und das darin enthaltene Kältemittel erwärmt, wodurch es zu einer Wärmeausdehnung des Kältemittels in dem Wärmeübertrager kommt. Gleichfalls wird das Kältemittel in dem Wärmeübertrager nicht benötigt, da während einer Phase eines Aufheizens des Prüfraums der Wärmeübertrager bzw. der Prüfraum nicht gleichzeitig gekühlt wird. Über einen möglichen Druckausgleich zwischen der Hochdruckseite und der Niederdruckseite des Kühlkreislaufs, beispielsweise über einen zwischen der Hochdruckseite und der Niederdruckseite verlaufenden Bypass, der ein Ventil, Magnetventil, Drosselorgan und/oder eine Druckausgleichskapillare aufweisen kann, könnte darüber hinaus Kältemittel in den Wärmeübertrager zurückströmen. Da in dem Kühlkreislauf in einer Strömungsrichtung nachfolgend dem Wärmeübertrager und vor dem Verdichter das Absperrorgan angeordnet ist, mittels dem ein Rückfluss von Kältemittel in den Wärmeübertrager entgegen der Strömungsrichtung des Kältemittels abgesperrt werden kann, kann dieser mögliche Rückfluss von Kältemittel in den Wärmeübertrager verhindert werden. Sollte es zur einer Leckage des Wärmeübertragers, bei der brennbares Kältemittel in den Prüfraum austreten kann, kommen, wäre die Menge des in den Prüfraum einströmenden Kältemittels vergleichsweise gering, da das Übrige, in dem Kühlkreislauf befindliche Kältemittel nicht durch einen Rückfluss in den Wärmeübertrager und damit in den Prüfraum gelangen könnte. Mittels des Absperrorgans wird es daher möglich, die Prüfkammer wesentlich sicherer auszubilden und brennbare Kältemittel bzw. Kohlenwasserstoffe als Kältemittel für die Prüfkammer nutzbar zu machen.

Das Kältemittel kann brennbar und/oder frei von fluorierten Kohlenwasserstoffen sein. Beispielsweise kann das Kältemittel Propan, Ethan, Ethylen, Propen, Isobutan, Butan oder dergleichen sein. Das Kältemittel kann auch ein Kältemittelgemisch aus Kohlenwasserstoffen bzw. den vorgenannten Komponenten oder ein Kältemittelgemisch mit überwiegend Kohlenwasserstoffen sein. Weiter kann das Kältemittel frei von fluorierten Kohlenwasserstoffen sein. Dadurch wird es möglich, zukünftige regulative Anforderungen an Kältemittel zu erfüllen und die Nachteile von fluorierten Kohlenwasserstoffen zu vermeiden. Auch kann das Kältemittel geeignet sein, eine Temperatur in einem Temperaturbereich von -40 °C bis +180 °C, bevorzugt -70 °C bis +180 °C, besonders bevorzugt bis -85 °C bis +200 °C, innerhalb des Prüfraums auszubilden.

Das Absperrorgan kann unmittelbar nachfolgend dem Wärmeübertrager in dem Kühlkreislauf angeordnet sein. Folglich kann dann zwischenliegend dem Absperrorgan und dem Wärmeübertrager keine weitere Leitung, kein Ventil des Kühlkreislaufs oder dergleichen, in einem zwischen dem Wärmeübertrager und dem Absperrorgan verlaufenden Leitungsabschnitt des Kühlkreislaufs angeschlossen sein. Somit kann ein Rückfluss von Kältemittel in den Wärmeübertrager, gegebenenfalls aus anderen Leitungen des Kühlkreislaufs, sicher verhindert werden.

Vorteilhaft kann das Absperrorgan ein Rückschlagventil sein. Das Rückschlagventil kann dann so in dem Kühlkreislauf angeordnet sein, dass Kältemittel von dem Wärmeübertrager in Strömungsrichtung über das Rückschlagventil zu dem Verdichter strömen kann, jedoch nicht in umgekehrter Richtung. Ein Rückfluss von Kältemittel in den Wärmeübertrager kann so mit einfachen und kostengünstigen Mitteln verhindert werden. Auch bei einer Wärmeausdehnung von Kältemittel in dem Wärmeübertrager kann dann bei einem geschlossenen Expansionsorgan noch Kältemittel über das Rückschlagventil aus dem Wärmeübertrager herausströmen, wodurch eine Menge bzw. Masse an Kältemittel in dem Wärmeübertrager weiter reduziert wird.

Alternativ kann das Absperrorgan ein Magnetventil sein, wobei in dem Kühkreislauf ein Bypass mit einem Überdruckventil angeordnet sein kann, wobei der Bypass in Strömungsrichtung nach dem Wärmeübertrager und vor dem Magnetventil sowie nach dem Magnetventil und vor dem Verdichter angeschlossen sein kann. Wenn das Expansionsorgan geschlossen wird, kann dann auch das Magnetventil geschlossen werden, sodass kein Kältemittel in den Wärmeübertrager entgegen der Strömungsrichtung zurückfließen kann. Kommt es zu einer Erwärmung des Kältemittels innerhalb des Wärmeübertragers, kann infolge von Wärmeausdehnung eine Menge an Kältemittel über das Überdruckventil bzw. den Bypass von dem Wärmeübertrager vor den Verdichter strömen. Ein Rückfluss von Kältemittel in den Wärmeübertrager ist über das Überdruckventil nicht möglich, da ein Druck in dem Wärmeübertrager vergleichsweise größer als ein Druck in dem Kühlkreislauf vor dem Verdichter ist. Auch für den Fall, dass eine Fehlfunktion des Magnetventils vorliegt bzw. ein Öffnen des Magnetventils nicht möglich ist, kann verhindert werden, dass bei einem Öffnen des Expansionsorgans zu viel Kältemittel in den Wärmeübertrager einströmt und sich ein Druck in dem Wärmeübertrager in unerwünschter Weise erhöht. In diesem Fall könnte sich der Wärmeübertrager mit flüssigem Kältemittel füllen, welches dann nicht über das Expansionsorgan oder das Magnetventil abfließen kann. Dieser unerwünschte Betriebszustand wird dann durch das Überdruckventil verhindert, welches bei einem unzulässigen Druckanstieg innerhalb des Wärmeübertragers öffnen und Kältemittel an dem Magnetventil vorbei auf die Niederdruckseite vor den Verdichter überströmen lassen kann.

Der Kühlkreislauf kann eine Druckausgleichsleitung aufweisen, die zwischen einer Hochdruckseite und einer Niederdruckseite des Kühlkreislaufs verlaufen kann, wobei in der Druckausgleichsleitung ein Magnetventil angeordnet sein kann. Mittels der Druckausgleichsleitung wird es dann möglich, einen Druckausgleich zwischen der Hochdruckseite und der Niederdruckseite herzustellen, wenn der Verdichter nicht betrieben wird. Die Druckausgleichsleitung kann unmittelbar in Strömungsrichtung nach dem Verdichter und vor dem Kondensator und/oder in Strömungsrichtung nach dem Kondensator und vor dem Expansionsorgan an der Hochdruckseite des Kühlkreislaufs angeschlossen sein und auf der Niederdruckseite vor dem Verdichter in den Kühlkreislauf münden. Bei einer Wärmeausdehnung von Kältemittel infolge des Nichtbetriebs des Verdichters wird es dann möglich, einen Druckausgleich zwischen der Hochdruckseite und der Niederdruckseite auszubilden. Gleichzeitig kann die Druckausgleichsleitung auch zur Regelung eines Saugdrucks und einer Kältemitteltemperatur vor dem Verdichter genutzt werden.

Die Temperiervorrichtung kann eine Regeleinrichtung mit zumindest einem Drucksensor in dem Kühlkreislauf umfassen, wobei der Drucksensor in Strömungsrichtung nach dem Expansionsorgan und vor dem Absperrorgan angeordnet sein kann, wobei mittels der Regeleinrichtung das Expansionsorgan abgesperrt und der Verdichter in Abhängigkeit eines gemessenen Drucks weiter betrieben werden kann. Mittels des Drucksensors wird es dann möglich, den Druck des Kältemittels in dem Wärmeübertrager zu messen bzw. zu bestimmen. Dies ermöglicht dann auch eine Absenkung des Drucks des Kältemittels in dem Wärmeübertrager durch ein Weiterbetreiben des Verdichters, auch wenn das Expansionsorgan abgesperrt ist. Wenn der Verdichter Kältemittel ansaugt, kann noch mehr Kältemittel aus dem Wärmeübertrager entfernt werden, sodass eine Menge an Kältemittel in dem Wärmeübertrager noch weiter verringert werden kann. Der Weiterbetrieb des Verdichters kann beispielsweise solange erfolgen, bis ein gewünschter Druck in dem Wärmeübertrager ausgebildet ist. Alternativ ist es auch möglich, eine Nachlaufzeit des Verdichters vorzusehen, um nach einem Schließen des Expansionsorgans dem Wärmeübertrager Kältemittel zu entziehen.

Die Prüfkammer kann eine Detektoreinrichtung mit zumindest einem Gassensor und einer Lüftungsanlage in einem gegenüber dem Prüfraum luftdicht getrennten Maschinenraum der Prüfkammer umfassen. Mit der Detektoreinrichtung wird es möglich im Falle einer Leckage des Kühlkreislaufs diese über den Gassensor zu detektieren und mittels der Lüftungsanlage den Maschinenraum zu entlüften. Da der Kühlkreislauf überwiegend in dem Maschinenraum angeordnet sein kann, kann auch in dem Maschinenraum Kältemittel austreten. Der Gassensor kann an einer möglichst tiefen Stelle im Maschinenraum angeordnet sein, sodass möglichst frühzeitig eventuell ausgetretener Kohlenwasserstoff bzw. Kältemittel detektiert werden kann. Um eine Verflüchtigung des austretenden Kältemittels in den Maschinenraum zu verhindern, können eventuelle Öffnungen im Maschinenraum oberhalb des Gassensors, beispielsweise 10 cm oberhalb des Gassensors, ausgebildet sein. Dadurch ist sichergestellt, dass austretender Kohlenwasserstoff, der sich naturgemäß aufgrund seiner höheren Dichte an einem Boden des Maschinenraums sammelt, sicher mittels des Gassensors detektiert werden kann. Weiter kann vorgesehen sein, dass die Lüftungsanlage unmittelbar an dem Boden des Maschinenraums angeordnet ist. Die Lüftungsanlage kann durch einen ATEX-zertifizierten Lüfter ausgebildet sein. Der Lüfter kann dann betrieben werden, wenn der Gassensor Kohlenwasserstoffe detektiert. Eine Abluftleitung des Lüfters kann außerhalb des Maschinenraums der Prüfkammer verlaufen.

Bei dem erfindungsgemäßen Verfahren zur Konditionierung von Luft in einem gegenüber einer Umgebung verschließbaren und temperaturisolierten Prüfraum einer Prüfkammer, insbesondere Klimakammer oder dergleichen, zur Aufnahme von Prüfgut, wird mittels einer Temperiervorrichtung der Prüfkammer einer Temperatur in einem Temperaturbereich von -40 °C bis +180 °C innerhalb des Prüfraums ausgebildet, wobei eine Temperatur innerhalb des Prüfraums mittels einer Kühleinrichtung der Temperiervorrichtung mit einem Kühlkreislauf von einer Heizeinrichutng ausgebildet wird, wobei der Kühlkreislauf ein Kältemittel, einen im Prüfraum angeordneten Wärmeübertrager, einen Verdichter, einen Kondensator und ein Expansionsorgan aufweist, wobei das Kältemittel ein Kohlenwasserstoff oder ein Kältemittelgemisch aus Kohlenwasserstoffen ist, wobei ein Rückfluss von Kältemittel in den Wärmeübertrager entgegen der Strömungsrichtung mittels eines in dem Kühlkreislauf in einer Strömungsrichtung nachfolgend dem Wärmeübertrager und vor dem Verdichter angeordneten Absperrorgans verhindert wird. Zu den vorteilhaften Wirkungen des erfindungsgemäßen Verfahrens wird auf die Vorteilsbeschreibung der erfindungsgemäßen Prüfkammer verwiesen.

Mittels einer Regeleinrichtung der Temperiervorrichtung kann das Expansionsorgan abgesperrt und mittels der Heizeinrichtung kann eine Temperatur von +50 °C bis +180 °C innerhalb des Prüfraums ausgebildet werden. Die Regeleinrichtung kann folglich dazu genutzt werden, das Expansionsorgan zu schließen und damit einen Durchfluss von Kältemittel durch den Wärmeübertrager zu stoppen. Gleichzeitig kann die Regeleinrichtung so mit der Heizeinrichtung gekoppelt sein, dass diese eine Temperatur innerhalb des Prüfraums erhöht. Dann kann auch das Kältemittel aus dem Wärmeübertrager weiter austreten, ohne dass Kältemittel in dem Wärmeübertrager entgegen der Strömungsrichtung zurückströmt.

Weiter kann mittels einer Regeleinrichtung der Temperiervorrichtung das Expansionsorgan abgesperrt und der Verdichter weiter betrieben werden. Auch hier kann die Regeleinrichtung das Expansionsorgan schließen, um einen Durchfluss von Kältemittel durch den Wärmeübertrager zu stoppen. Gleichzeitig kann jedoch vorgesehen sein, dass der Verdichter weiter betrieben wird, sodass unabhängig von einer Erwärmung des Prüfraums mittels einer Heizeinrichtung dem Wärmeübertrager Kältemittel entzogen wird. Eine Menge an Kältemittel in dem Wärmeübertrager kann so verringert werden, wobei ein Rückfluss von Kältemittel in den Wärmeübertrager über das Absperrorgan nicht mehr möglich ist.

Mittels zumindest einem Drucksensor der Regeleinrichtung kann ein Druck des Kältemittels in dem Kühlkreislauf in Strömungsrichtung nach dem Expansionsorgan und vor dem Absperrorgan bestimmt werden, wobei der Verdichter in Abhängigkeit eines gemessenen Drucks weiter betrieben werden kann. Eine Menge an Kältemittel in dem Wärmeübertrager kann so noch weiter verringert werden. Mit dem Drucksensor wird es möglich, den Druck des Kältemittels in dem Wärmeübertrager zu bestimmen bzw. zu überwachen und den Verdichter dann so lange zu betreiben, bis der Wärmeübertrager nur noch eine minimale Menge an Kältemittel enthält. Im Falle einer Leckage des Wärmeübertragers kann dann nur noch eine sehr kleine Menge an Kältemittel in den Prüfraum austreten.

Der Verdichter kann abgeschaltet werden, wenn der Druck in einem Bereich ≤ 1,5 bar und > 1 bar, bevorzugt ≤ 1,1 bar und > 1 bar, ist. So kann sichergestellt werden, dass der Druck in dem Wärmeübertrager nicht unter 1 bar absolut fallen kann. Sofern der Wärmeübertrager bzw. der Kühlkreislauf undicht sein sollte, kann so verhindert werden, dass durch den Betrieb des Verdichters Luft aus einer Umgebung bzw. dem Prüfraum in den Kühlkreislauf angesaugt wird. Eine Mischung von Luft und dem Kältemittel in dem Kühlkreislauf könnte zur Ausbildung eines explosionsfähigen Gemisches in dem Kühlkreislauf führen.

Bei Erreichen eines Soll-Drucks in einer Niederdruckseite des Kühlkreislaufs kann der Verdichter mittels der Regeleinrichtung abgeschaltet und das Absperrorgan abgesperrt werden. Der Verdichter kann dann so lange betrieben werden, bis der Soll-Druck in der Niederdruckseite des Kühlkreislaufs erreicht ist, d.h. dass dem Wärmeübertrager in der Niederdruckseite so lange Kältemittel entzogen wird, bis der Soll-Druck erreicht ist. Durch das Absperren des Absperrorgans wird dann ein Rückfluss von Kältemittel in den Wärmeübertrager verhindert. Das Absperrorgan kann ein Rückschlagventil oder ein Magnetventil sein.

Weitere vorteilhafte Ausführungsformen des Verfahrens ergeben sich aus den Merkmalsbeschreibungen der auf den Vorrichtungsanspruch 1 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: eine schematische Darstellung eines Kühlkreislaufs gemäß einer ersten Ausführungsform;
- **Fig. 2**: eine abschnittsweise Darstellung eines Kühlkreislaufs gemäß einer zweiten Ausführungsform;
- **Fig. 3**: eine abschnittsweise Darstellung eines Kühlkreislaufs gemäß einer dritten Ausführungsform.

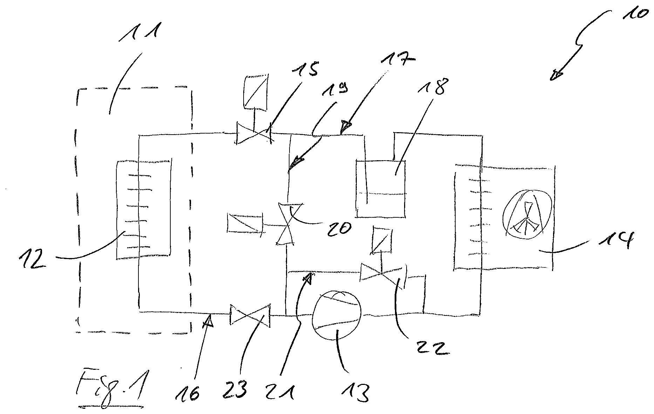

Die **Fig. 1** zeigt einen Kühlkreislauf 10 einer hier nicht weiter dargestellten Prüfkammer zur Konditionierung von Luft zusammen mit einem Prüfraum 11 der Prüfkammer. Der Kühlkreislauf 10 ist mit einem Kältemittel gefüllt und weist einen in dem Prüfraum 11 angeordneten Wärmeübertrager 12, einen Verdichter 13, einen Kondensator 14 und ein Expansionsorgan 15 auf. Das verwendete Kältemittel ist brennbar und ein Kohlenwasserstoff oder ein Kältemittelgemisch aus Kohlenwasserstoffen. Das Kältemittel wird von dem Verdichter 13 auf einer Niederdruckseite 16 des Kühlkreislaufs 10 angesaugt und auf eine Hochdruckseite 17 des Kühlkreislaufs 10 gefördert. Dabei strömt das Kältemittel durch den Kondensator 14, einen Speicherbehälter 18 und das Expansionsorgan 15 zurück in die Niederdruckseite 16. Das Kältemittel wird bei einer Passage des Expansionsorgans 15 entspannt und kühlt dadurch den Wärmeübertrager 12 in dem Prüfraum 11.

Weiter umfasst der Kühlkreislauf 10 eine erste Druckausgleichsleitung 19 mit einem ersten Magnetventil 20, die zwischen der Hochdruckseite 17 und der Niederdruckseite 16 verläuft. Die erste Druckausgleichsleitung 19 ist in einer Strömungsrichtung des Kältemittels nachfolgend dem Kondensator 14 und vor dem Expansionsorgan 15 sowie nachfolgend dem Wärmeübertrager 12 und vor dem Verdichter 13 angeschlossen. Über die erste Druckausgleichsleitung kann verdichtetes bzw. in dem Kondensator 14 verflüssigtes Kältemittel mit dem ersten Magnetventil 20 von der Hochdruckseite 17 vor den Verdichter 13 dosiert werden. Beispielsweise kann dann der Verdichter 13 weiter betrieben werden, ohne dass Kältemittel über das Expansionsorgan 15 strömt. Zumindest ist es auch möglich, einen Saugdruck auf der Niederdruckseite 16 zu regeln. Dies kann mit einer hier nicht dargestellten Regeleinrichtung erfolgen. Weiter ist eine zweite Druckausgleichsleitung 21 vorgesehen, die ein zweites Magnetventil 22 aufweist. Die zweite Druckausgleichsleitung 21 ist unmittelbar in einer Strömungsrichtung des Kältemittels nachfolgend dem Verdichter 13 und vor dem Kondensator 14 sowie nachfolgend dem Wärmeübertrager 12 und vor dem Verdichter 13 an den Kühlkreislauf 10 angeschlossen. Über die zweite Druckausgleichsleitung 21 kann verdichtetes und noch gasförmiges vergleichsweise heißes Kältemittel vor den Verdichter 13 zurückströmen. Neben einem Druckausgleich kann hier ebenfalls ein Saugdruck des Verdichters 13 sowie eine Temperatur des Kältemittels vor dem Verdichter 13 geregelt werden.

In dem Kühlkreislauf 10 ist insbesondere ein Absperrorgan 23 vorgesehen, welches in einer Strömungsrichtung des Kältemittels nachfolgend dem Wärmeübertrager 12 und vor dem Verdichter 13 in dem Kühlkreislauf 10 angeordnet ist. Das Absperrorgan 23 ist ebenfalls in Strömungsrichtung noch vor der ersten Druckausgleichsleitung 19 und der zweiten Druckausgleichsleitung 21 angeordnet. Das Absperrorgan 23 ermöglicht ein Absperren des Kühlkreislaufs 10, sodass ein Rückfluss von Kältemittel in den Wärmeübertrager 12 entgegen der Strömungsrichtung des Kältemittels verhindert werden kann. Somit kann sich dann kein Kältemittel entgegen der Strömungsrichtung in den Wärmeübertrager 12 verlagern. Dies ist besonders vorteilhaft, wenn eine Temperatur in dem Prüfraum 11 erhöht wird und das Expansionsorgan 15 geschlossen ist. Dann erfolgt keine Kühlung des Wärmeübertragers 12 und eine Wärmeausdehnung des Kältemittels in dem Wärmeübertrager 12. Das Kältemittel kann darüber hinaus aus dem Wärmeübertrager 12 noch mittels des Verdichters 13 abgesaugt werden, sodass sich in dem Wärmeübertrager 12 vergleichsweise wenig Kältemittel befindet. Im Falle einer Leckage des Verdichters 13 oder des Kühlkreislaufs 10 innerhalb des Prüfraums 11 kann dann nur sehr wenig brennbares Kältemittel in dem Prüfraum 11 austreten.

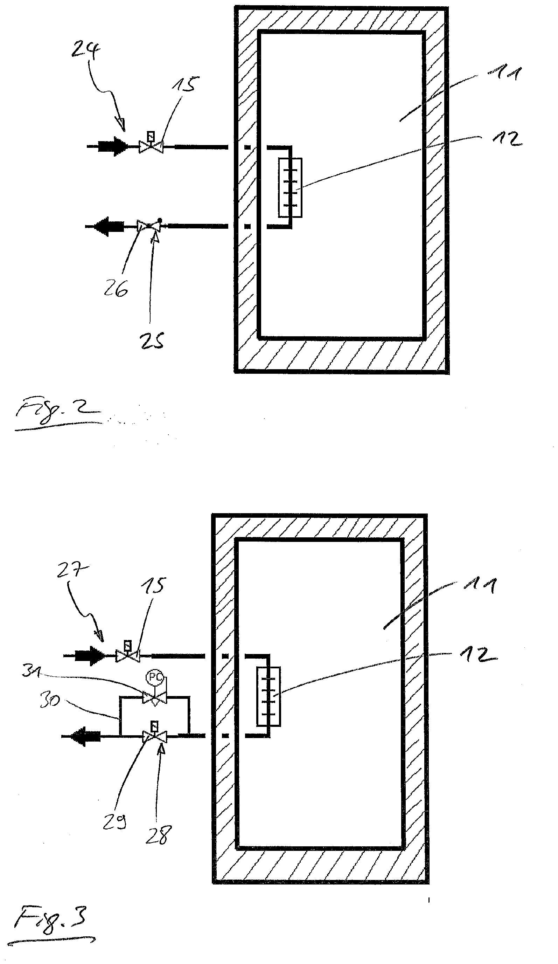

Die **Fig. 2** zeigt einen Kühlkreislauf 24, bei dem im Unterscheid zum Kühlkreislauf aus **Fig. 1** ein Absperrorgan 25 vorgesehen ist, welches als Rückschlagventil 26 ausgebildet ist. Nach einem Schließen des Expansionsorgans 15 kann dann Kältemittel aus dem Wärmeübertrager 12, beispielsweise infolge von Wärmeausdehnung bei einer Erwärmung des Prüfraums 11, über das Rückschlagventil 26 in der Strömungsrichtung aus dem Wärmeübertrager 12 austreten, wobei mittels des Rückschlagventils 26 ein Rückfluss von Kältemittel in den Wärmeübertrager 12 verhindert wird. Optional kann auch vorgesehen sein, dass der Wärmeübertrager 12 mittels des hier nicht dargestellten Verdichters evakuiert wird bzw. ein Druck in dem Wärmeübertrager 12 soweit abgesenkt wird, dass dieser im Wesentlichen einem Umgebungsdruck entspricht bzw. diesen nicht unterschreitet.

Die **Fig. 3** zeigt einen Kühlkreislauf 27 mit einem Absperrorgan 28. Im Unterschied zum Kühlkreislauf aus **Fig. 1** ist hier das Absperrorgan 28 durch ein Magnetventil 29 ausgebildet. Weiter ist ein Bypass 30 mit einem Überdruckventil 31 vorgesehen. Der Bypass 30 ist in Strömungsrichtung des Kältemittels nach dem Wärmeübertrager 12 und vor dem Magnetventil 29 sowie nach dem Magnetventil 29 und vor dem Verdichter, der hier nicht dargestellt ist, an den Kühlkreislauf 27 angeschlossen. Nach einem Schließen des Expansionsorgans 15 kann, wie zuvor beschrieben, die Menge an Kältemittel in dem Wärmeübertrager 12 verringert werden. Danach kann auch das Magnetventil 29 geschlossen werden. Im Falle einer Fehlfunktion des Magnetventils 29 könnte dieses beispielsweise nicht öffenbar sein, sodass nach einem erneuten Öffnen des Expansionsorgans 15 eine große Menge Kältemittel in den Wärmeübertrager 12 einströmen könnte. Dieses Kältemittel kann dann über das Überdruckventil 31, bei einem unzulässigen Druckanstieg innerhalb des Wärmeübertragers 12, abfließen bzw. überströmen.

## Patentansprüche

1. Prüfkammer zur Konditionierung von Luft, insbesondere Klimakammer oder dergleichen, wobei die Prüfkammer einen gegenüber einer Umgebung verschließbaren und temperaturisolierten Prüfraum (11) zur Aufnahme von Prüfgut, und eine Temperiervorrichtung zur Temperierung des Prüfraums umfasst, wobei mittels der Temperiervorrichtung eine Temperatur in einem Temperaturbereich von -40 °C bis +180 °C innerhalb des Prüfraums ausbildbar ist, wobei die Temperiervorrichtung eine Heizeinrichtung und eine Kühleinrichtung mit einem Kühlkreislauf (10, 24, 27) umfasst, wobei der Kühlkreislauf ein Kältemittel, einen im Prüfraum angeordneten Wärmeübertrager (12), einen Verdichter (13), einen Kondensator (14) und ein Expansionsorgan (15) aufweist, wobei das Kältemittel ein Kohlenwasserstoff oder ein Kältemittelgemisch aus Kohlenwasserstoffen ist,
**dadurch gekennzeichnet,**
**dass** in dem Kühlkreislauf in einer Strömungsrichtung nachfolgend dem Wärmeübertrager und vor dem Verdichter ein Absperrorgan (23, 25, 28) angeordnet ist, mittels dem ein Rückfluss von Kältemittel in den Wärmeübertrager entgegen der Strömungsrichtung absperrbar ist.

2. Prüfkammer nach Anspruch 1,
**dadurch gekennzeichnet,**
**dass** das Kältemittel brennbar und/oder frei von fluorierten Kohlenwasserstoffen ist.

3. Prüfkammer nach Anspruch 1 oder 2,
**dadurch gekennzeichnet,**
**dass** das Absperrorgan (23, 25, 28) unmittelbar nachfolgend dem Wärmeübertrager (12) in dem Kühlkreislauf (10, 24, 27) angeordnet ist.

4. Prüfkammer nach einem der vorangehenden Ansprüche,
**dadurch gekennzeichnet,**
**dass** das Absperrorgan (23, 25) ein Rückschlagventil (26) ist.

5. Prüfkammer nach einem der Ansprüche 1 bis 3,
**dadurch gekennzeichnet,**
**dass** das Absperrorgan (23, 25) ein Magnetventil (29) ist, wobei in dem Kühlkreislauf (27) ein Bypass (30) mit einem Überdruckventil (31) angeordnet ist, wobei der Bypass in Strömungsrichtung nach dem Wärmeübertrager (12) und vor dem Magnetventil sowie nach dem Magnetventil und vor dem Verdichter (13) angeschlossen ist.

6. Prüfkammer nach einem der vorangehenden Ansprüche,
**dadurch gekennzeichnet,**
**dass** der Kühlkreislauf (10, 24, 27) eine Druckausgleichsleitung (19, 21) aufweist, die zwischen einer Hochdruckseite (17) und einer Niederdruckseite (16) des Kühlkreislaufs verläuft, wobei in der Druckausgleichsleitung ein Magnetventil (20, 22) angeordnet ist.

7. Prüfkammer nach einem der vorangehenden Ansprüche,
**dadurch gekennzeichnet,**
**dass** die Temperiervorrichtung eine Regeleinrichtung mit zumindest einem Drucksensor in dem Kühlkreislauf (10, 24, 27) umfasst, wobei der Drucksensor in Strömungsrichtung nach dem Expansionsorgan (15) und vor dem Absperrorgan (23, 25, 28) angeordnet ist, wobei mittels der Regeleinrichtung das Expansionsorgan absperrbar und der Verdichter (13) in Abhängigkeit eines gemessenen Drucks weiter betreibbar ist.

8. Prüfkammer nach einem der vorangehenden Ansprüche,
**dadurch gekennzeichnet,**
**dass** die Prüfkammer eine Detektoreinrichtung mit zumindest einem Gassensor und einer Lüftungsanlage in einem gegenüber dem Prüfraum (11) luftdicht getrennten Maschinenraum der Prüfkammer umfasst.

9. Verfahren zur Konditionierung von Luft in einem gegenüber einer Umgebung verschließbaren und temperaturisolierten Prüfraum (11) einer Prüfkammer, insbesondere Klimakammer oder dergleichen, zur Aufnahme von Prüfgut, wobei mittels einer Temperiervorrichtung der Prüfkammer eine Temperatur in einem Temperaturbereich von -40 °C bis +180 °C innerhalb des Prüfraums ausgebildet wird, wobei mittels der Temperiervorrichtung eine Temperatur in einem Temperaturbereich von -50 °C bis +180 °C innerhalb des Prüfraums ausgebildet wird, wobei die Temperiervorrichtung eine Heizeinrichtung und wobei der Kühlkreislauf ein Kältemittel, einen im Prüfraum angeordneten Wärmeübertrager (12), einen Verdichter (13), einen Kondensator (14) und ein Expansionsorgan (15) aufweist, wobei das Kältemittel ein Kohlenwasserstoff oder ein Kältemittelgemisch aus Kohlenwasserstoffen ist,
**dadurch gekennzeichnet,**
**dass** ein Rückfluss von Kältemittel in den Wärmeübertrager entgegen der Strömungsrichtung mittels eines in dem Kühlkreislauf in einer Strömungsrichtung nachfolgend dem Wärmeübertrager und vor dem Verdichter angeordneten Absperrorgans (23, 25, 28) verhindert wird.

10. Verfahren nach Anspruch 9,
**dadurch gekennzeichnet,**
**dass** mittels einer Regeleinrichtung der Temperiervorrichtung das Expansionsorgan (15) abgesperrt und mittels der Heizeinrichtung eine Temperatur von +50 °C bis +180 °C innerhalb des Prüfraums (11) ausgebildet wird.

11. Verfahren nach Anspruch 9 oder 10,
**dadurch gekennzeichnet,**
**dass** mittels einer Regeleinrichtung der Temperiervorrichtung das Expansionsorgan (15) abgesperrt und der Verdichter (13) weiter betrieben wird.

12. Verfahren nach Anspruch 10 oder 11,
**dadurch gekennzeichnet,**
**dass** mittels zumindest einem Drucksensor der Regeleinrichtung ein Druck des Kältemittels in dem Kühlkreislauf (10, 24, 27) in Strömungsrichtung nach dem Expansionsorgan (15) und vor dem Absperrorgan (23, 25, 28) bestimmt wird, wobei der Verdichter (13) in Abhängigkeit eines gemessenen Drucks weiter betrieben wird.

13. Verfahren nach Anspruch 12,
**dadurch gekennzeichnet,**
**dass** der Verdichter (13) abgeschaltet wird, wenn der Druck in einem Bereich von ≤ 1,5 bar und > 1 bar, bevorzugt ≤ 1,1 bar und > 1 bar, ist.

14. Verfahren nach einem der Ansprüche 9 bis 13,
**dadurch gekennzeichnet,**
**dass** bei Erreichen eines Soll-Drucks in einer Niederdruckseite (16) des Kühlkreislaufs (10, 24, 27) der Verdichter (13) mittels der Regeleinrichtung abgeschaltet und das Absperrorgan (23, 25, 28) abgesperrt wird.
